# EUROPÄISCHE PATENTSCHRIFT

(11) **EP 2 660 571 B1**
(45) Veröffentlichungstag und Bekanntmachung des Hinweises auf die Patenterteilung: **08.03.2017**
(21) Anmeldenummer: 13001858.3
(22) Anmeldetag: 10.04.2013
(51) Int. Cl.: B65D 88/12, B65D 90/00, B65D 90/16, B65D 90/18

(54) **Wiegevorrichtung zum Messen der auf die Ablaufrolle eines Containers oder sonstigen Behälters ausgeübten Kraft.**
Weighing device for measuring the force exerted on the wheel of a container or other recipient.
Dispositif de pesée pour mesurer la force exercée sur le rouleau d'un conteneur ou autre récipient.

(30) Priorität: 04.05.2012 DE 102012008980
(43) Veröffentlichungstag der Anmeldung: 06.11.2013
(73) Patentinhaber: Ferro Eichinger GmbH & Co. KG, 82377 Penzberg (DE)
(72) Erfinder: Riemer, Oliver, 82377 Penzberg (DE)
(74) Vertreter: Zinnecker, Armin

(56) Entgegenhaltungen:
- WO-A1-2009/156726
- DE-A1- 3 340 438
- DE-A1- 19 962 816
- DE-C1- 3 500 891

## Beschreibung

Die Erfindung betrifft eine Wiegevorrichtung zum Messen der auf die Ablaufrolle eines Containers oder sonstigen Behälters ausgeübten Kraft.

Wenn ein Container oder ein sonstiger Behälter mit oder ohne Inhalt gewogen werden soll, ist es üblich, den Container oder Behälter zu einer Waage zu bringen und zu wiegen. Dies ist allerdings kompliziert und aufwendig.

Aus der DE 199 62 816 A1 ist eine Wiegevorrichtung zum Wiegen eines Containers bekannt.

Die DE 33 40 438 A1 offenbart eine Meßanordnung für Kraftmessungen mittels Dehnmeßstreifen.

Aus der DE 35 00 891 C1 ist ein Meßelement zur Ermittlung von Belastungen mit Hilfe von Schubspannungen bekannt.

Die WO 2009/156726 A1 offenbart ein Lastüberwachungssystem.

Aufgabe der Erfindung ist es, eine verbesserte Wiegevorrichtung zum Messen der auf die Ablaufrolle eines Containers oder sonstigen Behälters ausgeübten Kraft vorzuschlagen.

Erfindungsgemäß wird diese Aufgabe durch die Merkmale des Anspruchs 1 gelöst. Die Wiegevorrichtung umfaßt einen Meßbolzen, der an dem Container oder sonstigen Behälter abgestützt ist. Der Meßbolzen kann einen Meßaufnehmer aufweisen und/oder mit einem Meßaufnehmer zusammenwirken. Die Wiegevorrichtung umfaßt ferner ein Schwenkgehäuse, das an dem Container oder sonstigen Behälter schwenkbar gelagert ist. Das Schwenkgehäuse umfaßt ein Stützteil und ein Auflageblech. Das Stützteil dient zum Abstützen des Schwenkgehäuses und damit des Containers oder sonstigen Behälters auf dem Boden. Der Meßbolzen liegt auf dem Auflageblech auf. Das Auflageblech kann aus einem metallischen Werkstoff hergestellt sein, insbesondere aus einem metallischen Werkstoff, der Eisen enthält. Es kann allerdings auch aus einem anderem Werkstoff hergestellt sein.

Beim Wiegen wird die Gewichtskraft des Containers oder sonstigen Behälters von dem Stützteil über das Auflageblech auf den Meßbolzen übertragen. Sie kann von einem Meßaufnehmer, der an dem Meßbolzen vorgesehen ist oder der dem Meßbolzen zugeordnet ist, gemessen werden.

Vorteilhafte Weiterbildungen sind in den Unteransprüchen beschrieben.

Das Stützteil ist als Rolle ausgebildet. Die Rolle kann als feststehende Rolle oder als Ablaufrolle ausgestaltet sein.

Der Meßbolzen ist in einem Meßbolzengehäuse abgestützt und das Meßbolzengehäuse ist an einem Aufnahmegehäuse befestigt. Nach einer weiteren vorteilhaften Weiterbildung ist das Meßbolzengehäuse an dem zu wiegenden Container oder sonstigen Behälter oder an dem Aufnahmegehäuse über eine oder mehrere Führungen befestigt. Bei der oder den Führungen handelt es sich vorzugsweise um Längsführungen. Besonders geeignet sind Langlöcher.

Vorteilhaft ist es, wenn der Meßbolzen einen Meßbolzenring aufweist. Der Meßbolzenring des Meßbolzens liegt auf dem Auflageblech auf. Der Meßbolzenring ist vorzugsweise aus Kunststoff, insbesondere aus Polyamid, hergestellt.

Das Auflageblech kann geneigt verlaufen. Dies ist insbesondere dann vorteilhaft, wenn der Meßbolzen in einem Meßbolzengehäuse abgestützt ist und wenn das Meßbolzengehäuse an dem zu wiegenden Gegenstand oder an einem Aufnahmegehäuse über eine oder mehrere Führungen befestigt ist. Die Kombination eines geneigten Auflageblechs und eines geführten Meßbolzengehäuses kann dazu verwendet werden, den Meßbolzen oder dessen Meßbolzenring spielfrei auf dem Auflageblech aufliegen zu lassen.

Nach einer weiteren vorteilhaften Weiterbildung ist das Schwenkgehäuse an dem Aufnahmegehäuse schwenkbar gelagert.

Eine weitere vorteilhafte Weiterbildung ist dadurch gekennzeichnet, daß der zu wiegende Container oder sonstige Behälter oder das Aufnahmegehäuse einen Anschlag für das Schwenkgehäuse aufweist. Der Anschlag kann von einem Bolzen gebildet werden. Der Anschlag oder der Bolzen können an oder in dem Container oder sonstigen Behälter oder an oder in dem Aufnahmegehäuse angeordnet sein.

Vorteilhaft ist es, wenn der Gegenanschlag des Schwenkgehäuses an einer Führung des Schwenkgehäuses angeordnet ist. Bei der Führung handelt es sich insbesondere um eine Bogenführung. Besonders vorteilhaft ist es, wenn die Führung als bogenförmiges Langloch ausgestaltet ist. Der Anschlag kann von einem Ende der Bogenführung oder des bogenförmigen Langlochs gebildet werden.

Die Erfindung betrifft ferner einen Container oder sonstigen Behälter, der eine oder mehrere erfindungsgemäße Wiegevorrichtungen aufweist.

Ein Ausführungsbeispiel der Erfindung wird nachstehend anhand der beigefügten Zeichnung im einzelnen erläutert. In der Zeichnung zeigt
- Fig. 1: einen zu wiegenden Container in einer Vorderansicht, einer Seitenansicht und einer perspektivischen Ansicht,
- Fig. 2: ein Aufnahmegehäuse und ein Meßbolzengehäuse in einer Vorderansicht, einer Seitenansicht und einer perspektivischen Ansicht,
- Fig. 3: das Aufnahmegehäuse gemäß Fig. 2 in einer Vorderansicht, einer Seitenansicht und einer perspektivischen Ansicht,
- Fig. 4: das Meßbolzengehäuse gemäß Fig. 2 in einer Vorderansicht, einer Seitenansicht und einer perspektivischen Ansicht,
- Fig. 5: das Meßbolzengehäuse gemäß Fig. 4 mit einem Meßbolzen in einer Vorderansicht, einer Seitenansicht und einer perspektivischen Ansicht,
- Fig. 6: ein Schwenkgehäuse mit einer Ablaufrolle und einem Auflageblech in einer Vorderansicht, einer Seitenansicht und einer perspektivischen Ansicht,

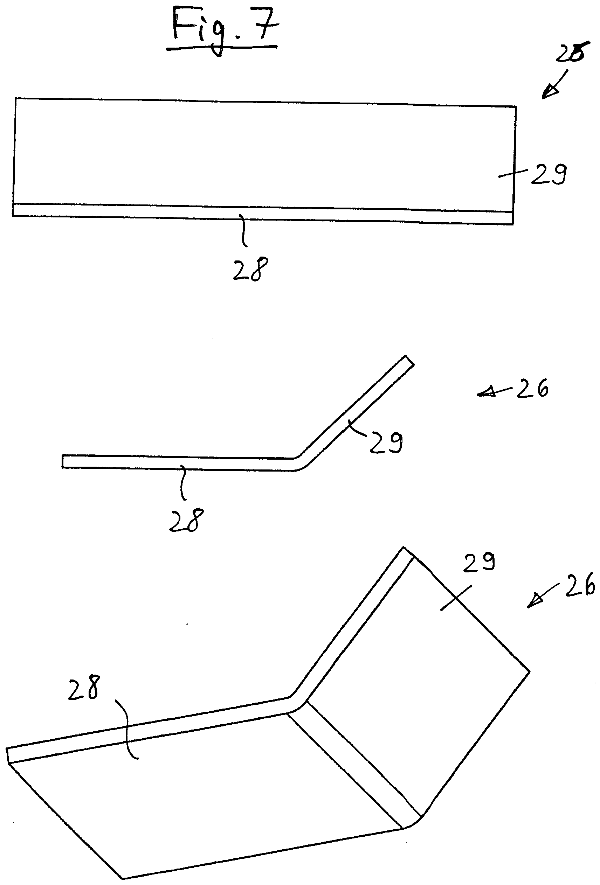

- Fig. 7: das Auflageblech gemäß Fig. 6 in einer Vorderansicht, einer Seitenansicht und einer perspektivischen Ansicht,
- Fig. 8: das Aufnahmegehäuse und das Meßbolzengehäuse gemäß Fig. 2 und das Schwenkgehäuse mit dem Auflageblech und der Ablaufrolle gemäß Fig. 6 in einer Vorderansicht, einer Seitenansicht und einer perspektivischen Ansicht und
- Fig. 9: die Seitenansicht gemäß Fig. 8 ohne die dem Betrachter zugewandten Seitenbleche.

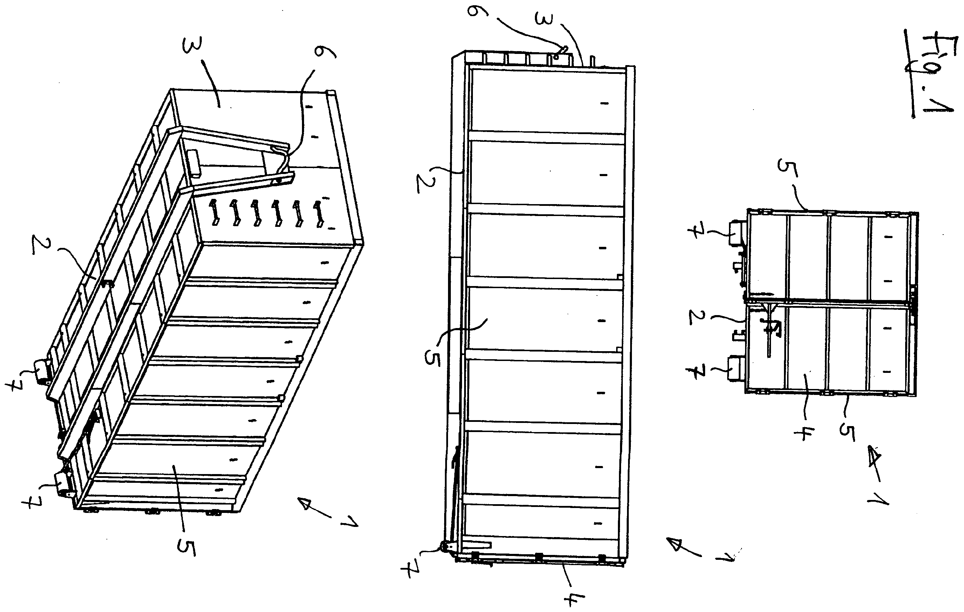

Fig. 1 zeigt einen zu wiegenden Container 1, der eine Bodenwand 2 mit Schienen, eine Vorderwand 3, eine Hinterwand 4 und Seitenwände 5 aufweist. Die Oberseite des Containers 1 kann offen oder geschlossen sein. An der Vorderwand 3 ist ein um eine horizontale Achse schwenkbarer Aufnahmehaken 6 vorgesehen.

Der Container 1 weist an seinem hinteren Ende zwei Ablaufrollen 7 auf. Die Ablaufrollen 7 sind an der Bodenwand 2 des Containers 1 befestigt. Sie ragen von der Bodenwand 2 nach unten. Die Ablaufrollen 7 befinden sich unterhalb der Hinterwand 4. Sie sind um horizontale Achsen, die miteinander fluchten, drehbar gelagert. Wenn der Container 1 an seinem Aufnahmehaken 6 angehoben wird, liegen nur noch die Ablaufrollen 7 des Containers 1 auf dem Boden auf.

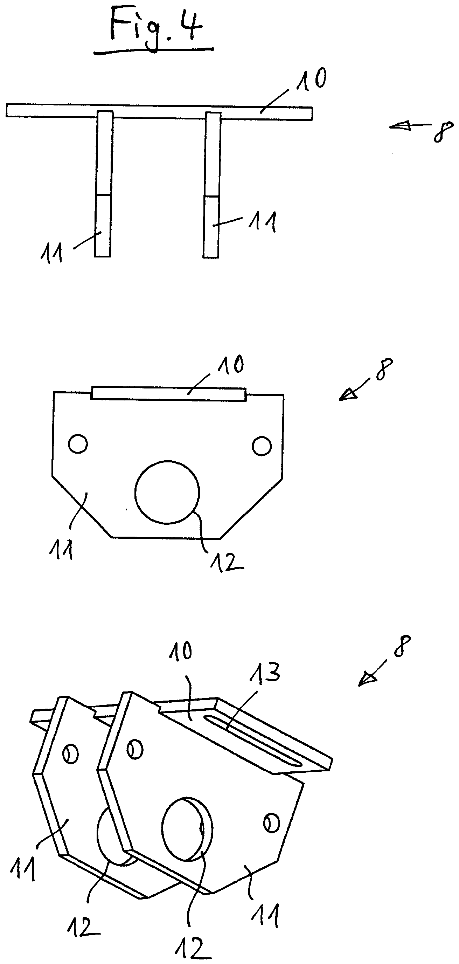

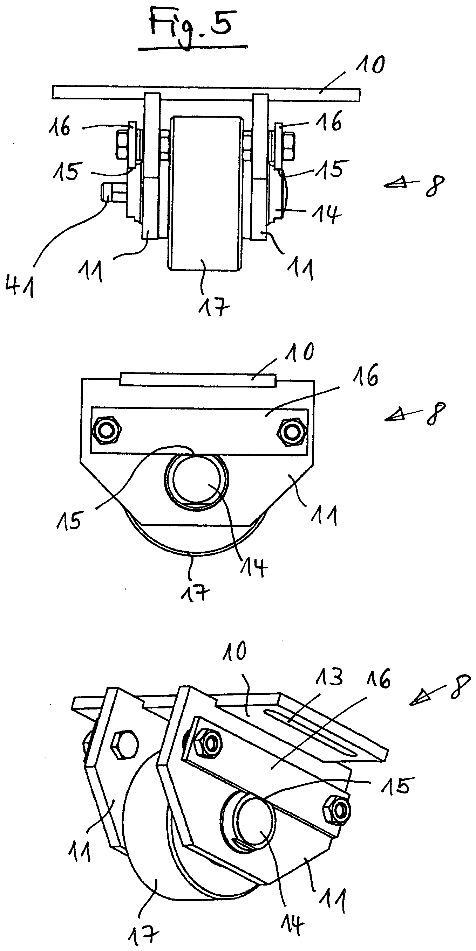

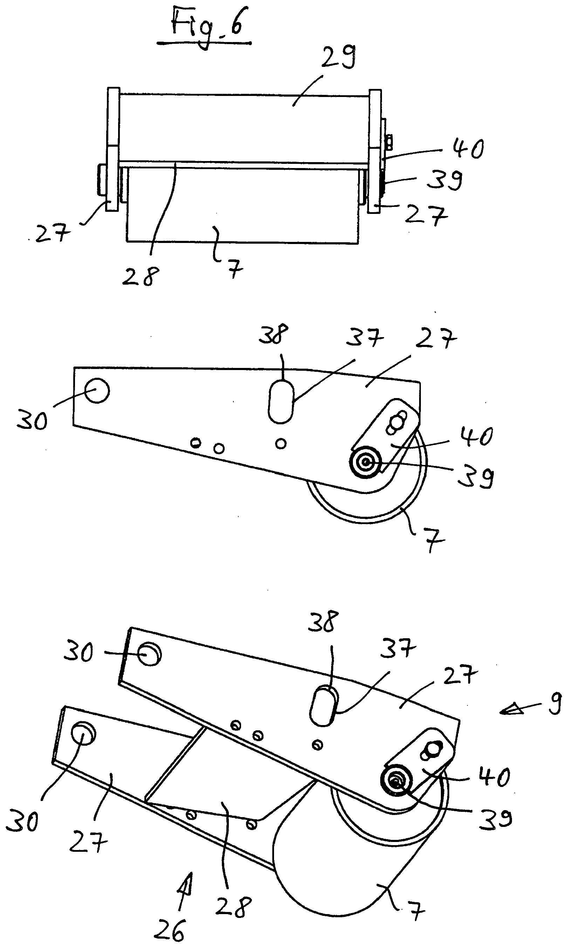

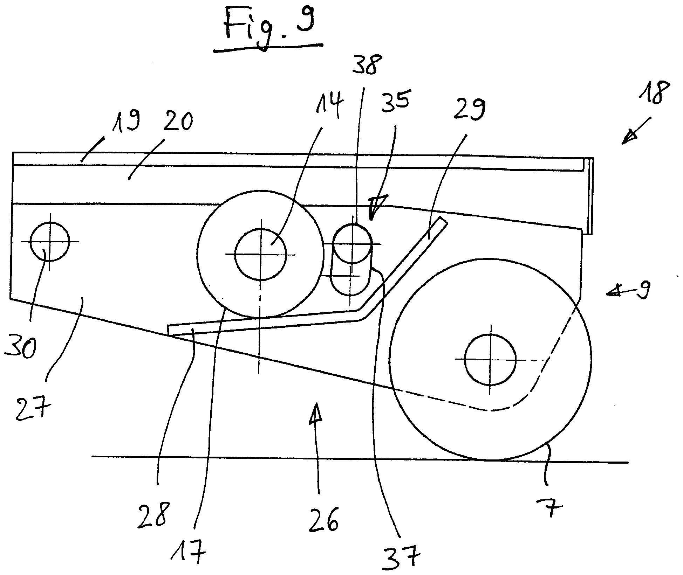

Die Wiegevorrichtung zum Wiegen des Containers 1 umfaßt ein Meßbolzengehäuse 8, das insbesondere in Fig. 4 und 5 gezeigt ist, und ein Schwenkgehäuse 9, das insbesondere in Fig. 6 dargestellt ist. Das Zusammenwirken dieser Gehäuse ist insbesondere aus Fig. 9 ersichtlich.

Wie in Fig. 4 dargestellt, umfaßt das Meßbolzengehäuse 8 eine Grundplatte 10, an der zwei Lagerplatten 11 befestigt sind. Die Lagerplatten 11 verlaufen rechtwinklig zur Grundplatte 10. Sie verlaufen ferner parallel zueinander und im Abstand voneinander. In jeder Lagerplatte 11 ist eine Lageröffnung 12 vorgesehen. Die Lageröffnungen 12 sind jeweils zylinderförmig. Ihre Mittenachsen sind koaxial. In der Grundplatte 10 des Meßbolzengehäuses 8 sind zwei Führungen 13 vorgesehen. Die Führungen 13 sind als Längsführungen ausgestaltet, nämlich als Langlöcher. Sie verlaufen parallel zu und im Abstand von den Lagerplatten 11. Dabei liegen die Führungen 13 jeweils außerhalb der Lagerplatten 11. In Fig. 4 ist nur eine der Führungen 13 zu sehen, die andere ist von der hinteren Lagerplatte 11 verdeckt.

In den Lageröffnungen 12 ist ein Meßbolzen 14 gelagert, wie aus Fig. 5 ersichtlich. Der Meßbolzen 14 ist in den Lageröffnungen 12 gegen axiales Verschieben und radiales Verdrehen gesichert. Hierzu weist der Meßbolzen 14 an seinen Enden jeweils eine halbnutförmige Abflachung 15 auf, in die jeweils eine Seitenplatte 16 eingreift, die an der jeweiligen Außenseite der Lagerplatte 11 befestigt ist.

Der Meßbolzen 14 weist einen Meßbolzenring 17 aus Polyamid auf. Er umgibt den Meßbolzen 14 und ist auf dem Meßbolzen 14 drehbar gelagert.

Ferner weist der Meßbolzen 14 einen Meßaufnehmer auf, der ein lastabhängiges Signal erzeugt, das über einen Anschlußnippel 41 und ein damit verbundenes Kabel (in der Zeichnung nicht dargestellt) an eine Auswerteeinrichtung weitergeleitet wird.

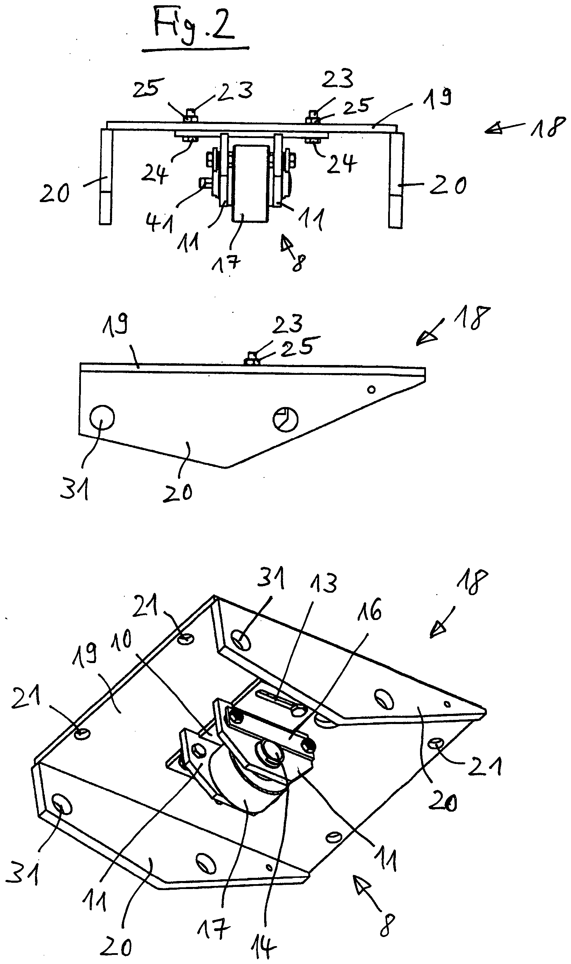

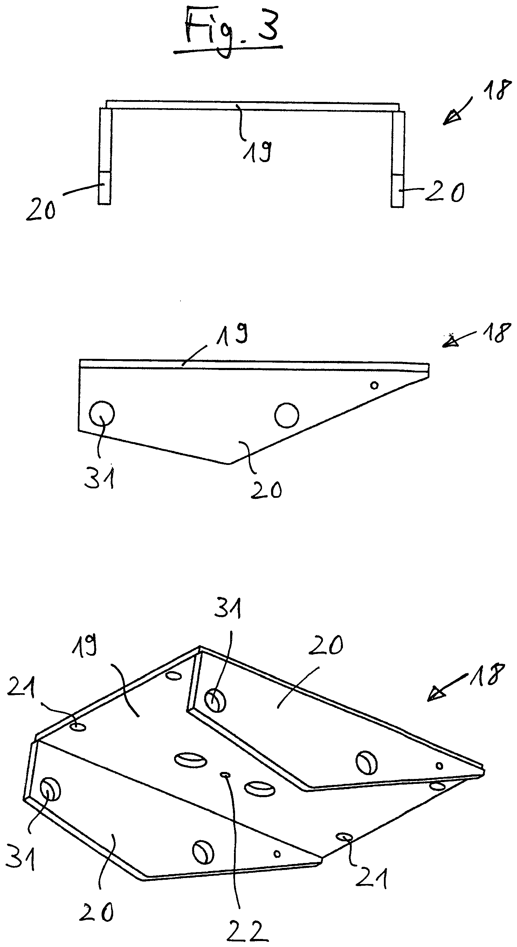

Das Meßbolzengehäuse 8 ist an einem Aufnahmegehäuse 18 befestigt, wie in Fig. 2 und 3 dargestellt. Das Aufnahmegehäuse 18 umfaßt eine Aufnahmeplatte 19 und seitliche Wangen 20, die von der Aufnahmeplatte 19 im wesentlichen senkrecht abstehen. Die Aufnahmeplatte 19 weist Befestigungslöcher 21 auf, die zur Befestigung an dem Container 1, insbesondere an dessen Bodenwand 2 dienen. Ferner weist die Aufnahmeplatte 19 Durchgangslöcher 22 auf, die von Schraubbolzen 23 durchgriffen werden, die jeweils einen Bolzenkopf 24 und ein Gewinde aufweisen, auf das eine Mutter 25 aufschraubbar ist.

Zur Verbindung des Meßbolzengehäuses 8 mit dem Aufnahmegehäuse 18 wird die Grundplatte 10 des Meßbolzengehäuses 8 an die Unterseite der Aufnahmeplatte 19 des Aufnahmegehäuses 18, die den Wangen 20 zugewandt ist, angelegt. Die Anlage der Grundplatte 10 des Meßbolzengehäuses 8 an die Unterseite der Aufnahmeplatte 19 des Aufnahmegehäuses 18 erfolgt derart, daß die als Langlöcher ausgestalteten Führungen 13 der Grundplatte 10 des Meßbolzengehäuses 8 im Bereich der Durchgangslöcher 22 der Aufnahmeplatte 19 des Aufnahmegehäuses 18 liegen. In dieser Position wird jeweils ein Schraubbolzen 23 durch eine als Langloch ausgebildete Führung 13 und ein Durchgangsloch 22 hindurchgesteckt, bis der Bolzenkopf 24 an der Grundplatte 10 anliegt. In dieser Stellung wird jeweils eine Mutter 25 auf einen Schraubbolzen 23 aufgeschraubt, wie in Fig. 2 gezeigt. Die Muttern 25 werden allerdings zunächst noch nicht vollständig angezogen.

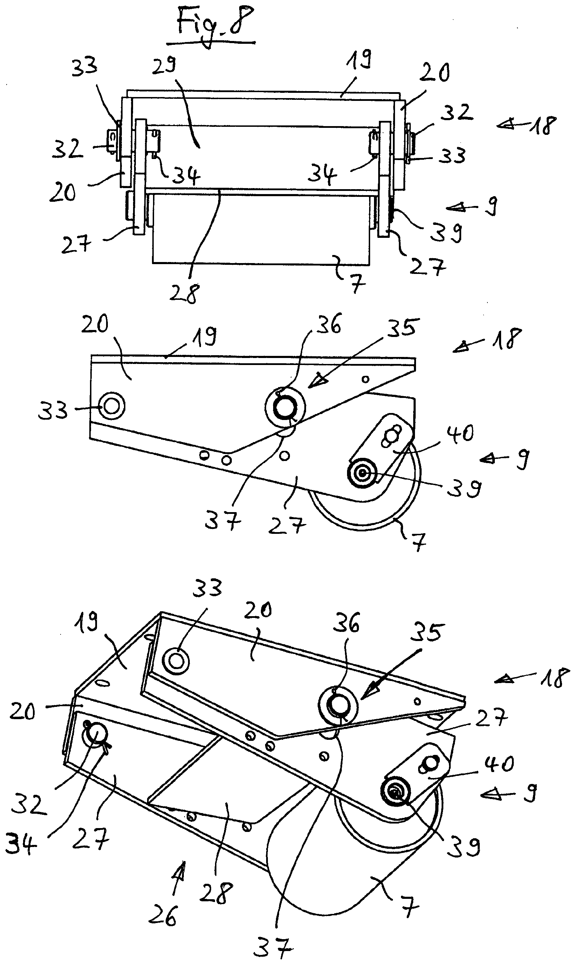

An dem Aufnahmegehäuse 18 ist das Schwenkgehäuse 9 schwenkbar gelagert, wie aus Fig. 8 ersichtlich. Das Schwenkgehäuse 9 umfaßt eine Ablaufrolle 7, ein Auflageblech 26 und seitliche Schwenkplatten 27, wie in Fig. 6 dargestellt. Das Auflageblech 26 umfaßt einen geneigt verlaufenden Bereich 28 und einen weiteren Bereich 29, der sich an den geneigt verlaufenden Bereich 28 in einem Winkel anschließt. Die Schwenkplatten 27 verlaufen im wesentlichen rechtwinklig zu dem Auflageblech 26. Sie sind fest mit dem Auflageblech 26 verbunden.

Die Ablaufrolle 7 ist an einer Steckachse 39 drehbar gelagert. Die Steckachse 39 ist an den Schwenkplatten 27 befestigt. Sie weist Nuten auf, in die Fixierungsplatten 40 eingreifen, die an den Schwenkplatten 27 befestigt ist. Durch den Eingriff der Fixierungsplatten 40 in die Nuten der Steckachse 39 ist die Steckachse 39 in axialer Richtung fixiert. Die Ablaufrolle 7 liegt zwischen den Schwenkplatten 27 und hinter dem Auflageblech 26.

Die Schwenkplatten 27 weisen an ihren vorderen, der Ablaufrolle 7 abgewandten Enden jeweils eine Lagerbohrung 30 auf. Die Lagerbohrungen 30 fluchten miteinander. In den Wangen 20 des Aufnahmegehäuses 18 sind entsprechende Lagerbohrungen 31 vorhanden. In der montierten Stellung, die in Fig. 8 gezeigt ist, wird jeweils eine Lagerbohrung 30 und 31 von einem Lagerbolzen 32 durchgriffen, der einen Bolzenkopf 33 aufweist und dessen anderes Ende durch einen Splint 34 gesichert ist. Der Abstand der Schwenkplatten 27 ist geringer als der Abstand der Wangen 20. Auf diese Weise liegt das Schwenkgehäuse 9 innerhalb des Aufnahmegehäuses 18.

Das Aufnahmegehäuse 18 weist einen Anschlag 35 für das Schwenkgehäuse 9 auf. Der Anschlag 35 wird von einem Bolzen gebildet, der jeweils eine Öffnung 36 in jeder Wange 20 des Aufnahmegehäuses 18 durchgreift. Der den Anschlag 35 bildende Bolzen ist an seinen Enden durch jeweils einen Splint 36 gesichert.

In jeder Schwenkplatte 27 ist eine Bogenführung 37 vorgesehen, die als bogenförmiges Langloch ausgebildet ist. Der Mittelpunkt des Bogens jeder Bogenführung 37 wird von der zugehörigen Lagerbohrung 30 gebildet. Im montierten Zustand, der in Fig. 8 gezeigt ist, durchgreift der als Bolzen ausgebildete Anschlag 35 jede Bogenführung 37. Das obere Ende jeder Bogenführung 37 bildet einen Gegenanschlag 38 des Schwenkgehäuses 9 für den von einem Bolzen gebildeten Anschlag 35 des Aufnahmegehäuses 18. Im unbelasteten Zustand, der in Fig. 8 gezeigt ist, fällt das Schwenkgehäuse 9 durch sein Eigengewicht nach unten, wobei es eine Drehbewegung um den Lagerbolzen 32 ausführt, bis der vom oberen Ende der Bogenführung 37 gebildete Gegenanschlag 38 an dem als Bolzen ausgebildeten Anschlag 35 des Aufnahmegehäuses 18 anliegt.

Bei der Montage der Wiegevorrichtung befindet sich das Meßbolzengehäuse 8 zunächst im vorderen Bereich des Aufnahmegehäuses 18, also in dessen den Lagerbohrungen 31 zugewandten Bereich. Das Aufnahmegehäuse 18 und das Schwenkgehäuse 9 nehmen die in Fig. 8 gezeigte Stellung ein, in der der Gegenanschlag 38 auf dem Anschlag 35 aufliegt. Anschließend wird das Meßbolzengehäuse 8 längs der als Langlöcher ausgbildeten Führungen 13 nach hinten verschoben, also zu dem Auflageblech 27 und der Ablaufrolle 7 hin. Das Meßbolzengehäuse 8 wird so weit nach hinten verschoben, bis der Meßbolzenring an dem geneigt verlaufenden Bereich 28 des Auflageblechs 27 anliegt, wie in Fig. 9 gezeigt. Um dies zu gewährleisten verläuft der geneigt verlaufende Bereich 28 des Auflageblechs 27 in einer Richtung von vorne unten nach hinten oben. In der erwähnten Stellung gemäß Fig. 9 werden die Muttern 25 vollständig angezogen, so daß das Meßbolzengehäuse 8 an dem Aufnahmegehäuse 18 fixiert wird. In dieser Stellung ist die Wiegevorrichtung spielfrei montiert. Hierdurch ist gewährleistet, daß das Schwenkgehäuse 9 nicht herabfallen kann, wenn der Container 1 an seinem hinteren Ende oder insgesamt vom Boden abgehoben wird, so daß die Ablaufrolle 7 nicht mehr auf dem Boden aufliegt.

Wenn sich die Ablaufrollen 7 auf dem Boden befinden, und wenn der Container 1 an dem Aufnahmehaken 8 im Bereich seiner Vorderwand 3 angehoben wird, wird der Container 1 nur noch an drei Punkten abgestützt, nämlich an dem Aufnahmehaken 6 und an den beiden Ablaufrollen 7. Durch die Wiegevorrichtung kann die auf jede Ablaufrolle 7 ausgeübte Kraft gemessen werden. Die auf die Ablaufrolle 7 ausgeübte Gewichtskraft wird über die Schwenkplatten 27 und den geneigt verlaufenden Bereich 28 des Auflageblechs 26 auf dem Meßbolzenring 17 des Meßbolzens 14 übertragen, wo sie gemessen werden kann. Daraus kann das Gewicht des Containers 1 bestimmt werden.

## Patentansprüche

1. Wiegevorrichtung zum Messen der auf die Ablaufrolle (7) eines Containers (1) oder sonstigen Behälters ausgeübten Kraft,
**gekennzeichnet durch**
einen Meßbolzen (14), der in einem Meßbolzengehäuse (8) abgestützt ist, das an einem Aufnahmegehäuse (18) befestigt ist, das an dem Container (1) oder sonstigen Behälter abgestützt ist, und
ein Schwenkgehäuse (9), das an dem Aufnahmegehäuse (18) schwenkbar gelagert ist und die Ablaufrolle (7) trägt, wobei das Schwenkgehäuse (9) ein Auflageblech (26) aufweist, auf dem der Meßbolzen (14) auflegbar ist.

2. Wiegevorrichtung nach Anspruch 1, **dadurch gekennzeichnet, daß** das Meßbolzengehäuse (8) an dem Aufnahmegehäuse (18) über eine oder mehrere Führungen (13) befestigt ist.

3. Wiegevorrichtung nach einem der vorhergehenden Ansprüche, **dadurch gekennzeichnet, daß** der Meßbolzen (14) einen Meßbolzenring (17) aufweist.

4. Wiegevorrichtung nach einem der vorhergehenden Ansprüche, **dadurch gekennzeichnet, daß** das Auflageblech (26) geneigt verläuft.

5. Wiegevorrichtung nach einem der vorhergehenden Ansprüche, **dadurch gekennzeichnet, daß** das Aufnahmegehäuse (18) einen Anschlag (35) für das Schwenkgehäuse (9) aufweist.

6. Wiegevorrichtung nach Anspruch 5, **dadurch gekennzeichnet, daß** der Gegenanschlag (38) des Schwenkgehäuses (9) an einer Führung des Schwenkgehäuses (9), insbesondere an einer Bogenführung (37) oder einem bogenförmigen Langloch angeordnet ist.

7. Container oder sonstiger Behälter, **gekennzeichnet durch** eine oder mehrere Wiegevorrichtungen nach einem der Ansprüche 1 bis 6.

## Claims

1. A weighing apparatus for measuring the force exerted on the ground roller (7) of a container (1) or of another receptacle,
**characterised by**
a measuring pin (14) that is supported in a measuring pin housing (8) that is fastened to a reception housing (18) that is supported at the container (1) or other receptacle; and
a pivot housing (9) that is pivotably supported at the reception housing (18) and that supports the ground roller (7), with the pivot housing (9) having a metal support plate (26) on which the measuring pin (14) can be placed.

2. A weighing apparatus in accordance with claim 1, **characterised in that** the measuring pin housing (8) is fastened via one or more guides (13) to the reception housing (18).

3. A weighing apparatus in accordance with one of the preceding claims, **characterised in that** the measuring pin (14) has a measuring pin ring (17).

4. A weighing apparatus in accordance with one of the preceding claims, **characterised in that** the metal support plate (26) extends at a slope.

5. A weighing apparatus in accordance with one of the preceding claims, **characterised in that** the reception housing (18) has an abutment (35) for the pivot housing (9).

6. A weighing apparatus in accordance with claim 5, **characterised in that** the counter-abutment (38) of the pivot housing (9) is arranged at a guide of the pivot housing (9), in particular at an arcuate guide (37) or at an arcuate elongated hole.

7. A container or other recipient, **characterised by** one or more weighing apparatus in accordance with any one of the claims 1 to 6.

## Revendications

1. Dispositif de pesée pour mesurer la force exercée sur le rouleau (7) d'un conteneur (1) ou autre récipient,
**caractérisé par**
un boulon de mesure (14), qui est supporté dans un boîtier de boulon de mesure (8), qui est fixé sur un boîtier de réception (18), lequel est supporté sur le conteneur (1) ou autre récipient, et
un boîtier pivotant (9), qui est monté pivotant sur le boîtier de réception (18) et qui porte le rouleau (7), le boîtier pivotant (9) comportant une plaque d'appui (26), sur laquelle le boulon de mesure (14) peut être placé.

2. Dispositif de pesée selon la revendication 1, **caractérisé en ce que** le boîtier de boulon de mesure (8) est fixé au boîtier de réception (18) par le biais d'un ou de plusieurs guidages (13).

3. Dispositif de pesée selon l'une des revendications précédentes, **caractérisé en ce que**
le boulon de mesure (14) comporte une bague de boulon de mesure (17).

4. Dispositif de pesée selon l'une des revendications précédentes, **caractérisé en ce que**
la plaque d'appui (26) s'étend de manière inclinée.

5. Dispositif de pesée selon l'une des revendications précédentes, **caractérisé en ce que**
le boîtier de réception (18) comporte une butée (35) pour le boîtier pivotant (9).

6. Dispositif de pesée selon la revendication 5, **caractérisé en ce que** la contre-butée (38) du boîtier pivotant (9) est disposée au niveau d'un guidage du boîtier pivotant (9), en particulier au niveau d'un guidage en courbe (37) ou d'un trou oblong en forme d'arc.

7. Conteneur ou autre récipient, **caractérisé par**
un ou plusieurs dispositifs de pesée selon l'une des revendications 1 à 6.
